# EUROPÄISCHE PATENTSCHRIFT

(11) **EP 2 404 723 B1**
(45) Veröffentlichungstag und Bekanntmachung des Hinweises auf die Patenterteilung: **05.06.2013**
(21) Anmeldenummer: 11005425.1
(22) Anmeldetag: 02.07.2011
(51) Int. Cl.: B27B 33/14, F16C 33/10

(54) **Schneidgarnitur einer Kettensäge und Sägekette**
Cutting fitting of a chainsaw and chainsaw
Garniture de coupe d'une scie à chaîne et chaîne de scie

(30) Priorität: 07.07.2010 DE 102010026324
(43) Veröffentlichungstag der Anmeldung: 11.01.2012
(73) Patentinhaber: Andreas Stihl AG & Co. KG, 71336 Waiblingen (DE)
(72) Erfinder: Gerstenberger, Oliver, 71254 Ditzingen (DE); Schell, Berthold, 71522 Backnang (DE); Fuchs, Alexander, 74321 Bietigheim-Bissingen (DE); Föhrenbach, Jan, 70378 Stuttgart (DE)
(74) Vertreter: Wasmuth, Rolf

(56) Entgegenhaltungen:
- DE-A1- 10 145 610
- FR-A1- 2 810 704
- US-A- 6 095 690

## Beschreibung

Die Erfindung betrifft eine Schneidgarnitur einer Kettensäge mit den Merkmalen nach dem Oberbegriff des Anspruchs 1 sowie eine zugehörige Sägekette.

Eine derartige Schneidgarnitur gebt beispielsweise aus der DE 101 45 610 A1 hervor.

Schneidgarnituren einer Kettensäge sowie zugehörige Sägeketten unterliegen beim Betrieb hohen mechanischen Belastungen, wobei insbesondere durch Reibung der einzelnen beweglichen Teile gegeneinander Verschleiß auftritt.

Eine solche Schneidgarnitur besteht im Wesentlichen aus einer Führungsschiene, entlang deren äußerer Umfangskante eine Führungsnut ausgebildet ist, in der eine aus einzelnen, gelenkig untereinander verbundenen Kettengliedern bestehende Sägekette umläuft. Die Sägekette weist dabei einzelne Treib- bzw. Räumglieder auf, die mit ihren jeweiligen Treib- bzw. Räumansätzen in der Führungsnut geführt sind. Beim Umlauf der Sägekette treten Reibkräfte insbesondere zwischen den Seitenwänden der ortsfesten Führungsnut und den Seitenflächen der relativ dazu bewegten Treib- bzw. Räumansätze auf.

Zur Schmierung der bestehenden Reibpaarungen ist eine Vielzahl von Schmiervorrichtungen bekannt, bei denen ein Schmiermittel beispielsweise in Form von Schmieröl in die Führungsnut eingebracht und dort von den Treib- bzw. Räumgliedern aufgenommen wird. Bei einer glatten und ebenen Ausbildung der Gleitflächen kann es dazu kommen, dass der sich daran ausbildende Schmiermittelfilm lokal abreißt, wobei es dort zu einer lokalen Trockenreibung mit erhöhtem Verschleiß kommt.

Zur Vermeidung des vorgenannten Schmiermittelfilmabrisses und der damit verbundenen Trockenreibung sind verschiedene Maßnahmen bekannt, die beispielsweise eine im Treibansatz angeordnete durchgehende Schmiermittelvorratsöffnung sowie in der Seitenfläche des Treibansatzes angeordnete Schmiermittelkanäle umfassen. Eine derartige Anordnung ist beispielsweise aus der DE 101 45 610 A1 bekannt, wobei zusätzlich oder alternativ dazu die Gleitflächen der Treibansätze mit einer Oberflächenstrukturierung versehen sein können. Die vorbekannte Oberflächenstrukturierung kann beispielsweise in die Seitenflächen eingeformte Schmiermitteltaschen umfassen, die nur zur Seitenwand der Führungsnut hin offen und im Übrigen geschlossen sind, also keine Verbindung zur Schmiermittelvorratsöffnung oder zum Schmiermittelkanal aufweisen. Es hat sich jedoch gezeigt, dass eine derartige Oberflächenstrukturierung in allgemeiner Form nicht die gewünschte Wirkung in Form der Ausbildung eines zuverlässig gegen Abriss geschützten Schmiermittelfilmes sicherstellt.

Der Erfindung liegt die Aufgabe zugrunde, eine gattungsgemäße Schneidgarnitur derart weiterzubilden, dass die Ausbildung eines zuverlässig geschlossenen Schmiermittelfilmes sichergestellt ist.

Diese Aufgabe wird durch eine Schneidgarnitur mit den Merkmalen des Anspruchs 1 gelöst.

Der Erfindung liegt des Weiteren die Aufgabe zugrunde, eine Sägekette anzugeben, die beim Einsatz in einer Schneidgarnitur einen abrissfreien Schmiermittelfilm aufbauen kann.

Diese Aufgabe wird durch eine Sägekette mit den Merkmalen des Anspruchs 16 gelöst.

Die Erfindung geht von der Erkenntnis aus, dass sich durch eine bestimmte geometrische Anpassung der Schmiermitteltaschen in den Seitenflächen der Treibansätze ein bestimmter überraschender Effekt erzielen lässt: Das bereitgestellte Schmieröl bildet an der Reibpaarung zwischen den Seitenflächen der Treibansätze und den Seitenwänden der Führungsnut einen Schmiermittelfilm aus, während sich im Inneren der Sahmiermitteltaschen ein Schmiermittelreservoir ansammelt. Zwischen diesem Schmiermittelreservoir und dem Schmiermittelfilm bildet sich ein zwischenliegendes Abgabevolumen des Schmiermittels aus. Dieses Abgabevolumen ergänzt einerseits den Schmiermittelfilm, sofern dieser droht zu dünn zu werden. Andererseits erzeugt das Abgabevolumen einen verwirbelten Bereich im Schmiermittelfilm nicht nur direkt an der Schmiermitteltasche, sondern auch in angrenzenden Bereichen der abseits der Schmiermitteltaschen ausgebildeten ebenen und glatten Gleitflächen. Durch eine entsprechende Anzahl, Verteilung und Ausgestaltung der Schmiermitteltaschen erstreckt sich der verwirbelte Bereich des Schmiermittelfilmes zumindest näherungsweise vollständig über die gesamte Seitenfläche der Treibansätze. Hierdurch und durch die in allen Betriebszuständen ausreichende Filmdicke ist ein lokales Abreißen des Schmiermittelfilmes auch abseits der Schmiermitteltaschen an den ebenen und glatten Gleitflächen der Treibansätze zuverlässig vermieden. Vielmehr bildet sich ein geschlossener Schmiermittelfilm ohne lokalen Filmabriss und ohne lokale Trockenreibung aus. Reibung und Verschleiß sind signifikant vermindert.

Die vorgenannten überraschenden Effekte lassen sich erzielen, wenn das Verhältnis des mittleren Durchmessers zur maximalen Tiefe der Schmiermitteltasche in einem Bereich von einschließlich 7,0 bis einschließlich 15,0 liegt und insbesondere etwa 10,0 beträgt. Der mittlere Durchmesser der Schmiermitteltasche liegt in einem Bereich von einschließlich 0,6 mm bis einschließlich 1,0 mm, bevorzugt in einem Bereich von einschließlich 0,7 mm bis einschließlich 0,9 mm, und beträgt insbesondere etwa 0,8 mm. Die maximale Tiefe der Schmiermitteltasche liegt vorteilhaft in einem Bereich von einschließlich 0,04 mm bis einschließlich 0,12 mm, bevorzugt in einem Bereich von einschließlich 0,06 mm bis einschließlich 0,10 mm und beträgt insbesondere etwa 0,08 mm.

Um die oben beschriebene vorteilhafte Wirkung zu erzielen, kommen verschiedene Längsschnittformen bzw. Längsschnittkonturen der Schmiermitteltaschen in Betracht. Insbesondere weist die Schmiermitteltasche einen konkav gekrümmten Taschenboden mit einem mittleren Krümmungsradius auf, wobei der mittlere Krümmungsradius des Taschenbodens in einem Bereich von einschließlich 1,5 mm bis einschließlich 5,5 mm liegt, bevorzugt in einem Bereich von einschließlich 2,5 mm bis einschließlich 4,5 mm liegt und insbesondere etwa 3,5 mm beträgt.

Um einen zuverlässigen Schmiermittelaustausch zwischen dem Schmiermittelreservoir der Schmiermitteltaschen und dem Schmiermittelfilm sicherzustellen, kann es zweckmäßig sein, dass die Schmiermitteltasche einen konvex gerundeten, umlaufenden Taschenrand mit einem mittleren Krümmungsradius aufweist, wobei der mittlere Krümmungsradius des Taschenrandes in einem Bereich von einschließlich 0,05 mm bis einschließlich 0,25 mm liegt und insbesondere etwa 0,15 mm beträgt.

Die Schmiermitteltasche weist vorteilhaft ein Volumen auf, welches in einem Bereich von einschließlich 0,012 mm³ bis einschließlich 0,028 mm³ liegt und insbesondere etwa 0,020 mm³ beträgt. In der Praxis hat sich gezeigt, dass hierdurch ein hinreichend großes Reservoir und ein hinreichend großes Abgabevolumen des Schmiermittels für den Schmiermittelfilm bereitgestellt ist, ohne dass die verbleibenden glatten und ebenen Gleitflächen der Treibansätze zu sehr gestört werden. Bevorzugt weisen die Schmiermitteltaschen je eine Taschenfläche auf, wobei die abseits davon ausgebildete Gleitfläche in ihrer Gesamtheit eine Grundfläche aufweist, und wobei die Summe der Taschenflächen einer einzelnen Seitenfläche in einem Bereich von einschließlich 10% bis einschließlich 40%, bevorzugt in einem Bereich von einschließlich 15% bis einschließlich 30% der Grundfläche liegt, und insbesondere etwa 20% der Grundfläche beträgt. Einerseits ist die zuverlässige Ausbildung eines hinreichend dicken und nicht zum Abriss neigenden Schmiermittelfilmes sichergestellt. Andererseits weist die verbleibende Gleitfläche eine hinreichend große Grundfläche für die erforderliche Tragfähigkeit zur Aufnahme der Betriebslasten auf.

Die Seitenfläche der Treibansätze ist durch einen Rand begrenzt, wobei die Schmiermitteltaschen vorteilhaft in einem Abstand von mindestens 0,5 mm zu diesem Rand liegen. Hierdurch ist ein unnötiger Schmiermittelverlust aus dem Reservoir der Schmiermitteltaschen heraus direkt in die Führungsnut der Führungsschiene hinein vermieden.

Im Treibansatz sind zweckmäßig eine durchgehende Schmiermittelvorratsöffnung und/oder ein Schmiermittelkanal angeordnet. Die durchgehende Schmiermittelvorratsöffnung stellt im Vergleich zu den Schmiermitteltaschen ein deutlich größeres Vorratsvolumen an Schmiermittel bereit, welches auch unter schwierigen Betriebsbedingungen zum Aufbau eines geschlossenen Schmiermittelfilmes abgegeben wird. Der Schmiermittelkanal sorgt für die Verteilung des Schmiermittelvorrates auch an schwer zugängliche Stellen. Ergänzend dazu erfüllen die Schmiermitteltaschen die Aufgabe der lokalen Verwirbelung und Aufrechterhaltung des geschlossenen Schmiermittelfilmes, wodurch die Zuverlässigkeit der Schmierwirkung unter Vermeidung von Trockenreibung gesteigert ist.

Für die geometrische Ausgestaltung der Schmiermitteltaschen kommen verschiedene Optionen in Betracht. Bevorzugt weist die Schmiermitteltasche einen kreisscheibenförmigen Grundriss und zweckmäßig einen Taschenboden in Form eines Kugelabschnittes auf. Hierdurch ist eine gute Wirksamkeit mit einer leichten Herstellbarkeit beispielsweise durch Prägen verbunden. Die Ausbildung lokaler Spannungsspitzen im Material der Treibansätze in Folge des Prägevorganges ist auf ein Minimum reduziert.

Für eine gleichmäßige Ausgestaltung des Schmiermittelfilmes hat sich eine Anzahl von mindestens vier, bevorzugt mindestens sieben und insbesondere mindestens zehn Schmiermitteltaschen pro Seitenfläche der Treibansätze als zweckmäßig herausgestellt.

Ein Ausführungsbeispiel der Erfindung ist nachfolgend anhand der Zeichnung näher beschrieben. Es zeigen:
- Fig. 1: in einer schematischen Seitenansicht eine Kettensäge mit einer erfindungsgemäß ausgeführten, teilweise geschnitten dargestellten Schneidgarnitur;
- Fig. 2: eine vergrößerte Darstellung der Einzelheit II nach Fig. 1 mit im Detail gezeigten Kettengliedern der Sägekette;
- Fig. 3: eine perspektivische Darstellung eines Treibgliedes nach den Figuren 1 und 2 mit Einzelheiten zur Ausgestaltung seiner Seitenflächen und in die Seitenflächen eingeprägter Schmiermitteltaschen;
- Fig. 4: eine vergrößerte Querschnittdarstellung des Treibansatzes nach Fig. 3 mit Einzelheiten zur geometrischen Ausgestaltung der Schmiermitteltasche;
- Fig. 5: eine vergrößerte Querschnittsdarstellung der Schneidgarnitur nach Fig. 1 im Bereich der dort gezeigten Einzelheit II mit Angaben zur Ausbildung von Reibpaarungen;
- Fig. 6: eine vergrößerte Darstellung der Einzelheit VI nach Fig. 5 mit Details zur gegenseitigen Anordnung der Schmiermitteltaschen und Seitenwand der Führungsnut;
- Fig. 7: die Schnittdarstellung nach Fig. 4 mit schematisch angedeuteten, im Betrieb sich einstellenden Schmiermittelreservoir, Abgabevolumen und Schmiermittelfilm einschließlich eines sich im Schmiermittelfilm ausbildenden verwirbelten Bereichs.

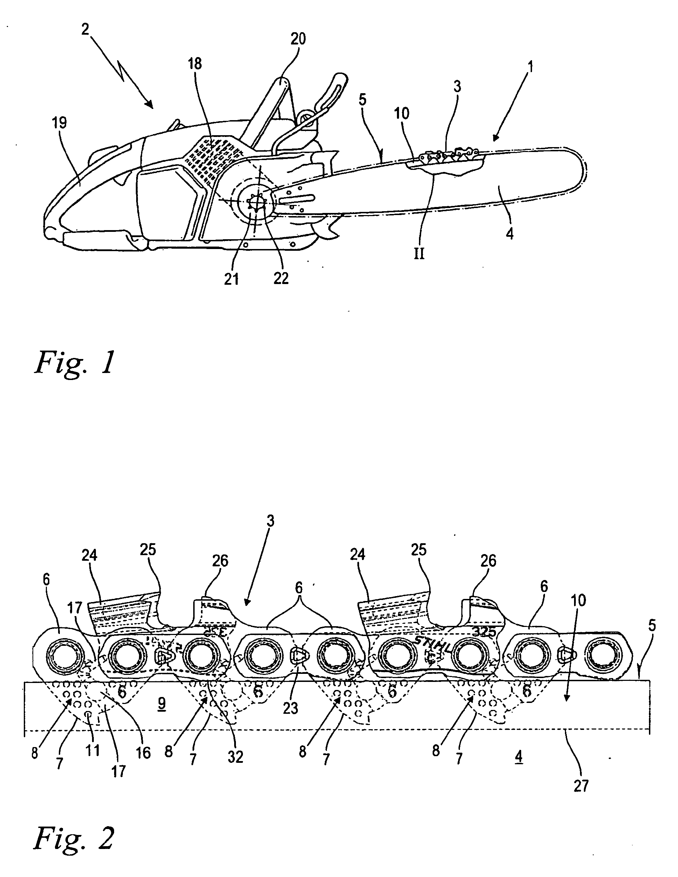

Fig. 1 zeigt in einer schematischen Seitenansicht eine Kettensäge 2 mit einer erfindungsgemäß ausgeführten Schneidgarnitur 1. Die Kettensäge 2 umfasst neben der Schneidgarnitur 1 ein Motor- und Griffgehäuse mit einem hinteren Handgriff 19 und einem vorderen Handgriff 20, an denen die Kettensäge 2 im Betrieb gehalten und geführt wird. Im Motorgehäuse ist ein Antriebsmotor 18 angeordnet, der im gezeigten Ausführungsbeispiel ein einzylindriger Zweitakt-Verbrennungsmotor ist, aber auch ein Viertaktmotor sein kann. Anstelle eines Verbrennungsmotors kann auch ein Elektromotor vorgesehen sein.

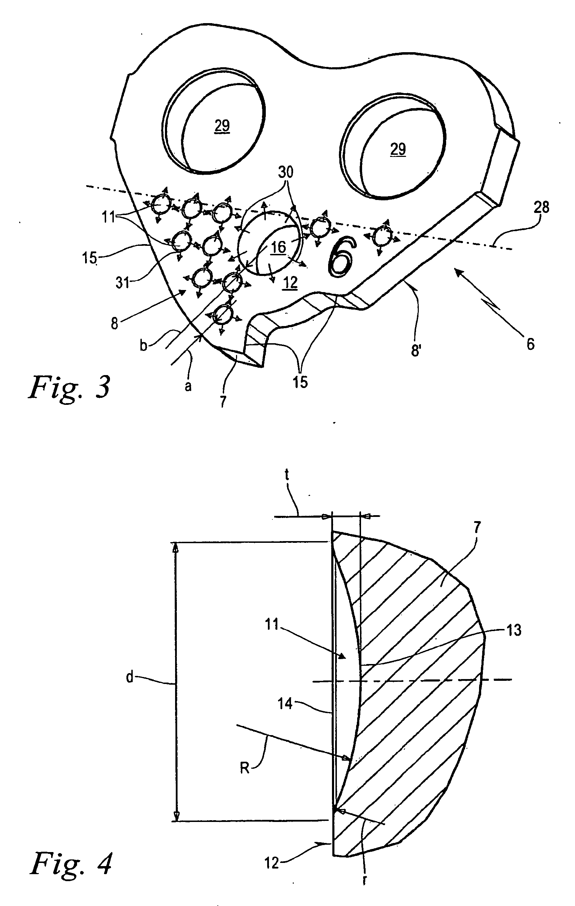

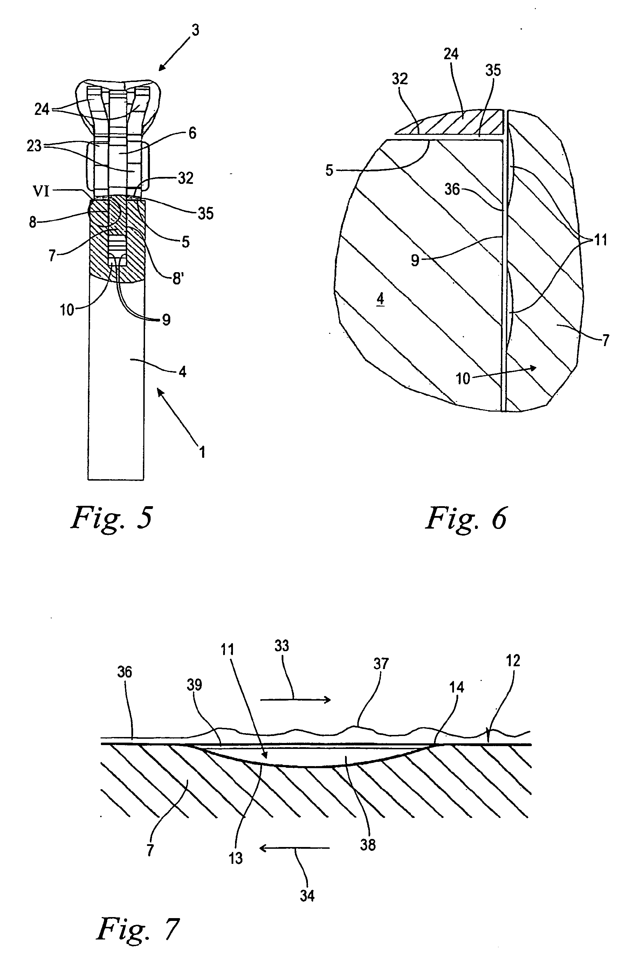

Die Schneidgarnitur 1 umfasst eine Führungsschiene 4 sowie eine Sägekette 3, die entlang einer teilweise um die Führungsschiene 4 umlaufenden Kante 5 in einer Führungsnut 10 der Führungsschiene 4 geführt ist. Die Sägekette 3 ist aus gelenkig untereinander verbundenen Kettengliedern gebildet, von denen ein Teil als in den Figuren 2 und 3 näher dargestellte Treibglieder 6 mit Treibansätzen 7 ausgebildet ist. Die in den Figuren 2 und 7 dargestellten Treibansätze 7 greifen in die Führungsnut 10 ein, wodurch die Sägekette 3 an der Führungsschiene 4 geführt ist.

Der Antriebsmotor 18 treibt über eine Fliehkraftkupplung 21 oberhalb einer Einkuppeldrehzahl ein Kettenritzel 22 an, welches mit seinen radial hervorstehenden Zähnen im Eingriff mit den Treibansätzen 7 (Figuren 2, 3) der Treibglieder 6 steht und dadurch die Sägekette 3 um die äußere Kante 5 der Führungsschiene 4 umlaufend antreibt.

In Fig. 1 ist noch eine Einzelheit II bezeichnet, die in vergrößerter Detaildarstellung in Fig. 2 gezeigt ist. Demnach umfasst die Sägekette 3 Schneidglieder 24 mit Schneiden 25 und Tiefenbegrenzern 26, wobei zwischen den einzelnen Schneidgliedern 24 Verbindungsglieder 23 angeordnet sind. Die in wechselnder Folge angeordneten Verbindungsglieder 23 und Schneidglieder 24 sind untereinander mittels Gelenkbolzen und den zwischenliegenden Treibgliedern 6 gelenkig verbunden. Die Verbindungsglieder 23 und die Schneidglieder 24 weisen jeweils untere Kanten 32 auf, mit denen sie auf der äußeren umlaufenden Kante 5 der Führungsschiene 4 aufliegen. Hierdurch weisen die Treibansätze 7 der Treibglieder 6 in Höhenrichtung einen Abstand zu einem Nutgrund 27 der Führungsnut 10 auf. Seitlich ist die Führungsnut 10 durch Seitenwände 9 begrenzt, an denen beidseitig die Seitenflächen 8 der Treibansätze 7 unter Bildung von Reibpaarungen abgleiten. Zur Schmierung der vorgenannten Reibpaarungen ist eine nicht dargestellte Schmiermittelversorgung vorgesehen, mittels derer flüssiges Schmieröl in den Bereich der Führungsnut 10 gefördert wird.

In die Seitenflächen 8 der Treibansätze 7 sind nach der Erfindung Schmiermitteltaschen 11 eingeformt, deren Ausgestaltung weiter unten näher beschrieben ist. Optional können noch weiter unten näher beschriebene Schmiermittelvorratsöffnungen 16 in den Treibansätzen 7 sowie angedeutete Schmiermittelkanäle 17 in den Seitenflächen 8 der Treibansätze 7 angeordnet sein. Die Schmiermitteltaschen 11, die Schmiermittelvorratsöffnungen 16 und die Schmiermittelkanäle 17 dienen der Verteilung sowie der lokalen Bevorratung kleiner Teilmengen des flüssigen Schmieröls sowie der Ausbildung eines über die gesamten Seitenflächen 8 der Treibansätze 7 sich erstreckenden, geschlossenen und nicht zum Abriss neigenden Schmierölfilms.

Fig. 3 zeigt in perspektivischer Ansicht ein einzelnes Treibglied 6 der Sägekette 3 nach den Figuren 1 und 2 mit zwei Gelenköffnungen 29 zur Aufnahme der Gelenkbolzen, mittels derer das Treibglied 6 an die benachbarten Verbindungsglieder 23 bzw. Schneidglieder 24 gelenkig angebunden ist. Parallel zur Längsrichtung der gestreckten Sägekette 3 (Figuren 1, 2) ist eine Linie 28 eingezeichnet, auf deren den Gelenköffnungen 29 gegenüberliegenden Seite sich der Treibansatz 7 mit seinen beidseitigen Seitenflächen 8, 8' erstreckt. Die Linie 28 begrenzt dabei zusammen mit einem Rand 15 die Seitenfläche 8, wobei die Linie 28 durch die geometrische Verbindung der unteren Kanten 32 der angrenzenden Verbindungsglieder 23 und Schneidglieder 24 (Fig. 2) korrespondierend zur äußeren Kante 5 der Führungsschiene 4 vorgegeben ist. Innerhalb der nach vorstehender Maßgabe begrenzten Seitenflächen 8, 8' findet eine geschmierte Gleitreibung der Treibglieder 6 an den Seitenwänden 9 der Führungsnut 10 (Figuren 1, 2) statt.

In die hier dem Betrachter zugewandte Seitenfläche 8 des Treibansatzes 7 sind Schmiermitteltaschen 11 eingeformt, wobei sie im gezeigten Ausführungsbeispiel in das aus Stahl bestehende Material des Treibgliedes 6 eingeprägt sind. Es sind zweckmäßig mindestens vier, bevorzugt mindestens sieben und insbesondere mindestens zehn Schmiermitteltaschen 11 in jeder Seitenfläche 8 angeordnet, wobei hier genau zehn Schmiernitteltaschen 11 pro Seitenfläche 8 des einzelnen Treibgliedes 6 vorgesehen sind. Die einzelnen Schmiermitteltaschen 11 sind entsprechend der Darstellung nach Fig. 6 nur zur angrenzenden Seitenwand 9 der Führungsnut 10 hin offen und im Übrigen abgeschlossen, also weder untereinander noch mit der Schmiermittelvorratsöffnung 16 oder dem optionalen Schmiermittelkanal 17 (Fig. 2) verbunden. Entsprechend der Darstellung nach Fig. 4 bildet dadurch jede einzelne Schmiermitteltasche 11 ein durch die Einhüllende bzw. Ebene einer außerhalb der Schmiermitteltaschen 11 liegenden Gleitfläche 12, durch einen Taschenboden 13 und einen um die Schmiermitteltasche 11 umlaufenden Taschenrand 14 begrenztes, abgeschlossenes Volumen. Die Restfläche der Seitenfläche 8 außerhalb der Schmiermitteltaschen 11, der Schmiermittelvorratsöffnung 16 und des Schmiermittelkanals 17 (Fig. 2) ist als eine ebene, glatte und zur Anlage an der Seitenwand 9 der Führungsnut 10 (Figuren 1, 2) vorgesehene Gleitfläche 12 ausgebildet.

Im Betrieb wird Schmieröl aus der Führungsnut 10 mittels der Treibansätze 7 entsprechend der Darstellung nach Fig. 2 aufgenommen und ggf. unter Zuhilfenahme der Schmiermittelkanäle 17 an den äußeren Oberflächen der Treibglieder 6 verteilt. Hierbei sammelt sich in der durch den Treibansatz 7 durchgehenden Schmiermittelvorratsöffnung 16 (Fig. 3) eine größere Vorratsmenge an Schmieröl an, die bei Bedarf wie durch Pfeile 30 angedeutet zur Ergänzung des vorhandenen Schmiermittelfilmes abgegeben und über die Seitenflächen 8 verteilt wird. Dabei gelangt auch ein Teil des Schmieröls in die einzelnen Schmiermitteltaschen 11 als kleinere, lokale Vorratsmengen, die ihrerseits bei Bedarf in den Schmierölfilm auf die Seitenflächen 8 und insbesondere auf die Gleitflächen 12 entsprechend Pfeilen 31 abgegeben wird.

Die Schmiermitteltaschen 11 können verschiedene geeignete Grundrissformen bzw. Konturen aufweisen, wobei in der gezeigten bevorzugten Ausführungsform der Grundriss jeder einzelnen Schmiermitteltasche 11 kreisscheibenförmig ist. Dieser kreisscheibenförmige Grundriss weist jeweils eine Taschenfläche einer einzelnen Schmiermitteltasche 11 auf, während die verbleibende, abseits der Schmiermitteltaschen 11, der Schmiermittelvorratsöffnungen 16 und der Schmiermittelkanäle 17 (Fig. 2) sich erstreckende Gleitfläche 12 eine Grundfläche aufweist. Die Summe der Taschenflächen einer einzelnen Seitenfläche 8 liegt zweckmäßig in einem Bereich von einschließlich 10% bis einschließlich 40%, bevorzugt in einem Bereich von einschließlich 15% bis einschließlich 30% der Grundfläche einer einzelnen Seitenfläche 8. Im gezeigten Ausführungsbeispiel beträgt die Summe der Taschenflächen einer einzelnen Seitenfläche 8 insbesondere etwa 20% der Grundfläche einer einzelnen Seitenfläche 8.

Der Darstellung nach Fig. 3 ist noch zu entnehmen, dass die Schmiermitteltaschen 11 mit ihrem Taschenrand 14 (Fig. 4) in einem Abstand a zum Rand 15 des Treibansatzes 7 sowie in einem Abstand b zum äußeren Rand der Schmiermittelvorratsöffnung 16 liegen. Der Abstand a beträgt bevorzugt mindestens 0,5 mm, während der Abstand b zweckmäßig mindestens 0,3 mm beträgt. Sofern auch ein Schmiermittelkanal 17 entsprechend der Darstellung nach Fig. 2 vorgesehen ist, ist auch hierzu der Abstand b einzuhalten.

Die gegenüberliegende, hier nicht erkennbare Seitenfläche 8' ist in analoger Weise zur vorstehend beschriebenen Seitenfläche 8 ausgeführt.

Fig. 4 zeigt in einer vergrößerten Detaildarstellung einen Längsschnitt durch den Treibansatz 7 des Treibgliedes 6 nach Fig. 3 im Bereich einer einzelnen Schmiermitteltasche 11. Die Schmiermitteltasche 11 weist einen konkav gekrümmten Taschenboden 13 auf, wobei verschiedene Formen der konkaven Krümmung in Betracht kommen können und dabei jeweils einen mittleren Krümmungsradius R aufweisen. Im gezeigten Ausführungsbeispiel in Verbindung mit dem kreisscheibenförmigen Grundriss der Schmiermitteltasche 11 ist der Taschenboden 13 in Form eines Kugelabschnittes mit an jedem Ort gleichem Krümmungsradius ausgebildet, wobei dieser gleiche bzw. konstante Krümmungsradius gleich dem mittleren Krümmungsradius R ist. Der mittlere Krümmungsradius R des Taschenbodens 13 liegt in einem Bereich von einschließlich 1,5 mm bis einschließlich 5,5 mm und bevorzugt in einem Bereich von einschließlich 2,5 mm bis einschließlich 4,5 mm. Im gezeigten bevorzugten Ausführungsbeispiel beträgt er etwa 3,5 mm. Der um die Schmiermitteltasche 11 umlaufende Taschenrand 14 ist im Querschnitt konvex gerundet und sorgt für einen gleichmäßigen und fließenden Übergang vom Taschenboden 11 zur angrenzenden Gleitfläche 12. Der umlaufende Taschenrand 14 weist einen mittleren Krümmungsradius r auf, der bevorzugt in einem Bereich von einschließlich 0,05 mm bis einschließlich 0,25 mm liegt und hier etwa 0,15 mm beträgt.

Durch den umlaufenden Taschenrand 14 ist ein mittlerer Durchmesser d der Schmiermitteltasche 11 vorgegeben, wobei der mittlere Durchmesser d im gezeigten Ausführungsbeispiel wegen der Kreisscheibenform der Schmiermitteltasche 11 gleich dem tatsächlichen Durchmesser ist. Bei abweichenden Grundrissformen der Schmiermitteltasche 11 beispielsweise in Form von Ovalen, Ellipsen oder dgl. kann aus dieser unregelmäßigen Form durch Mittelung des Abstandes zwischen gegenüberliegenden Punkten des Taschenrandes 14 der mittlere Durchmesser d gebildet werden. Außerdem kann der Darstellung nach Fig. 4 entnommen werden, dass durch den Taschenboden 13 und die an die Schmiermitteltasche 11 angrenzende Gleitfläche 12 eine senkrecht zur Gleitfläche 12 gemessene maximale Tiefe t der Schmiermitteltasche 11 vorgegeben ist. Das Verhältnis des mittleren Durchmessers d zur maximalen Tiefe t liegt erfindungsgemäß in einem Bereich von einschließlich 7,0 bis einschließlich 15,0, und beträgt hier etwa 10,0.

Der mittlere Durchmesser d der Schmiermitteltasche 11 liegt erfindungsgemäß in einem Bereich von einschließlich 0,6 mm bis einschließlich 1,0 mm, bevorzugt in einem Bereich von einschließlich 0,7 mm bis einschließlich 0,9 mm, und beträgt hier etwa 0,8 mm. Die maximale Tiefe t liegt vorteilhaft in einem Bereich von einschließlich 0,04 mm bis einschließlich 0,12 mm, bevorzugt in einem Bereich von einschließlich 0,06 mm bis einschließlich 0,10 mm, und beträgt hier etwa 0,08 mm.

Fig. 5 zeigt eine Querschnittsdarstellung der Schneidgarnitur 1 nach Fig. 1 im Bereich der dort gekennzeichneten Einzelheit II. Demnach liegen die Treibglieder 6 abwechselnd zwischen je einem Verbindungsglied 23 und einem Schneidglied 24. Die Treibansätze 7 der Treibglieder 6 ragen in die Führungsnut 10 ein, wobei sie mit ihren beidseitig gegenüberliegenden Seitenflächen 8, 8' an den angrenzenden, ebenfalls beidseitig gegenüberliegenden Seitenwänden 9 der Führungsnut 10 gleitend anliegen. Zwischen den unteren Kanten 32 der Verbindungsglieder 23 bzw. Schneidglieder 24 und den äußeren Kanten 5 der Führungsschiene 4 bildet sich ein Schmierölfilm 35 aus, während sich zwischen den Seitenflächen 8, 8' und den angrenzenden Seitenwänden 9 ein in den Figuren 6 und 7 dargestellter Schmierölfilm 36 ausbildet.

Fig. 6 zeigt eine vergrößerte Ansicht der Einzelheit VI nach Fig. 5, demnach die Schmiermitteltaschen 11 zur gegenüberliegenden Seitenwand 9 der Führungsschiene 4 hin offen sind. Ein Teil der Schmiermitteltaschen 11 ist derart angeordnet, dass sie über die Überdeckung der Seitenwand 9 und deren Begrenzung durch die äußere Kante 5 hinausgehend sich erstrecken und dadurch zumindest den Schmierölfilm 35 zwischen der unteren Kante 32 und der äußeren Kante 5 sowie auch einen kleinen Teil des Schneidgliedes 24 bzw. des Verbindungsgliedes 23 (Fig. 5) mit abdecken. Hierdurch wirken die Schmiermitteltaschen 11 nicht nur auf den Schmierölfilm 36 zwischen den Treibansätzen 7 und den Seitenwänden 9 der Führungsnut 10, sondern auch auf den Schmierölfilm 35 zwischen den unteren Kanten 32 und den äußeren Kanten 5 ein.

Fig. 7 zeigt die Anordnung nach Fig. 4 im Betrieb mit der schematisch dargestellten Ausbildung des Ölfilmes 36.

Innerhalb der Grenzen einer einzelnen Schmiermitteltasche 11, die durch den Taschenboden 13, den umlaufenden Taschenrand 14 sowie die durch die Gleitfläche 12 aufgespannte Ebene gebildet sind, weist jede einzelne Schmiermitteltasche 11 einen Volumen auf, welches in einem Bereich von einschließlich 0,012 mm³ bis einschließlich 0,028 mm³ liegt und hier etwa 0,020 mm³ beträgt und mit Schmieröl gefüllt ist.

Im Betrieb bewegt sich der Treibansatz 7 relativ zur nicht dargestellten Seitenwand 9 der Führungsnut 10 (Fig. 6) entsprechend Pfeilen 33, 34. Bei der erfindungsgemäßen Ausgestaltung der Schneidgarnitur 1 bzw. der Sägekette 3 (Fig. 1) ist dabei entsprechend der Darstellung nach Fig. 7 ein dreischichtiger Aufbau des Schmieröles zu beobachten. Im unteren Bereich angrenzend an den Taschenboden 13 befindet sich ein Schmiermittelreservoir 38, oberhalb dessen sich etwa bis zur Ebene der Gleitfläche 12 ein Abgabevolumen 39 erstreckt. Das Schmiermittelreservoir 38 und das Abgabevolumen 39 des Schmieröls ergänzen sich zusammen zu dem Volumen der einzelnen Schmiermitteltasche 11. Als dritte Schicht darüber ist der Schmierölfilm 36 ausgebildet. Durch die erfindungsgemäße Ausgestaltung erfährt der Schmierölfilm 36 in Folge der Scherbewegung nach den Pfeilen 33, 34 im Bereich der Schmiermitteltasche 11 eine Verwirbelung. Diese Verwirbelung erzeugt im Schmierölfilm 36 einen verwirbelten Bereich 37, der schematisch durch eine unregelmäßige Linie angedeutet ist, und der sich sowohl über die Grundfläche der Schmiermitteltasche 11 als auch über einen Teil der angrenzenden Gleitfläche 12 erstreckt. In Folge der Verwirbelung findet einerseits ein Schmierölaustausch mit dem Abgabevolumen 39 statt. Hierdurch wird der Schmierölfilm 36 bei Lastspitzen aus dem Reservoir 38 und dem Abgabevolumen 39 mit zusätzlichem Schmieröl versorgt. Andererseits weist der verwirbelte Bereich 37 eine verbesserte Haftung an der glatten und unstrukturierten Gleitfläche 12 auf. Durch die vorstehend beschriebene geometrische Ausgestaltung und Anordnung der Schmiermitteltaschen 11 kann eine Ausbildung des Ölfilmes 36 erzielt werden, bei der der Ölfilm 36 auf der gesamten Seitenfläche 8 nahezu vollständig aus einem verwirbelten Bereich 37 besteht. Hierdurch wird die Haftung des Ölfilmes 36 an der glatten und unstrukturierten Gleitfläche 12 verbessert und ein Abreißen des Schmierölfilms 36 von der Gleitfläche 12 bzw. von der Seitenwand 9 (Fig. 6) zuverlässig vermieden. Selbst unter ungünstigen Betriebsbedingungen tritt keine Trockenreibung ein, so dass die Reibung vermindert und die Lebensdauer der Sägekette 3 bzw. der Schneidgarnitur 1 insgesamt (Fig. 1) erhöht ist.

## Patentansprüche

1. Schneidgarnitur (1) einer handgeführten, durch einen Antriebsmotor (18) angetriebenen Kettensäge (2), umfassend eine Sägekette (3) mit gelenkig untereinander verbundenen Kettengliedern sowie eine Führungsschiene (4) zur Führung der Sägekette (3) entlang einer teilweise umlaufenden Kante (5), wobei die Sägekette (3) Treibglieder (6) mit Treibansätzen (7) aufweist, die mit ihren Seitenflächen (8) zwischen Seitenwänden (9) einer Führungsnut (10) der Führungsschiene (4) unter Bildung einer Reibpaarung gleitend geführt sind, wobei in die Seitenfläche (8) Schmiermitteltaschen (11) eingeformt sind, die nur zur Seitenwand (9) der Führungsnut (10) hin offen und im Übrigen abgeschlossen sind, und wobei die Seitenfläche (8) abseits der Schmiermitteltaschen (11) eine ebene, an der Seitenwand (9) der Führungsnut (10) abgleitende Gleitfläche (12) aufweist,
**dadurch gekennzeichnet, dass** die Schmiermitteltasche (11) einen mittleren Durchmesser (d) und eine maximale Tiefe (t) aufweist, wobei das Verhältnis des mittleren Durchmessers (d) zur maximalen Tiefe (t) in einem Bereich von einschließlich 7,0 bis einschließlich 15,0 liegt, und wobei der mittlere Durchmesser (d) der Schmiermitteltasche (11) in einem Bereich von einschließlich 0,6 mm bis einschließlich 1,0 mm liegt.

2. Schneidgarnitur nach Anspruch 1,
**dadurch gekennzeichnet, dass** das Verhältnis des mittleren Durchmessers (d) zur maximalen Tiefe (t) etwa 10,0 beträgt.

3. Schneidgarnitur nach Anspruch 1 oder 2,
**dadurch gekennzeichnet, dass** der mittlere Durchmesser (d) der Schmiermitteltasche (11) in einem Bereich von einschließlich 0,7 mm bis einschließlich 0,9 mm liegt, und insbesondere etwa 0,8 mm beträgt.

4. Schneidgarnitur nach einem der Ansprüche 1 bis 3,
**dadurch gekennzeichnet, dass** die maximale Tiefe (t) der Schmiermitteltasche (11) in einem Bereich von einschließlich 0,04 mm bis einschließlich 0,12 mm liegt, bevorzugt in einem Bereich von einschließlich 0,06 mm bis einschließlich 0,10 mm liegt, und insbesondere etwa 0,08 mm beträgt.

5. Schneidgarnitur nach einem der Ansprüche 1 bis 4,
**dadurch gekennzeichnet, dass** die Schmiermitteltasche (11) einen konkav gekrümmten Taschenboden (13) mit einem mittleren Krümmungsradius (R) aufweist, wobei der mittlere Krümmungsradius (R) des Taschenbodens (13) in einem Bereich von einschließlich 1,5 mm bis einschließlich 5,5 mm liegt, bevorzugt in einem Bereich von einschließlich 2,5 mm bis einschließlich 4,5 mm liegt, und insbesondere etwa 3,5 mm beträgt.

6. Schneidgarnitur nach einem der Ansprüche 1 bis 5,
**dadurch gekennzeichnet, dass** die Schmiermitteltasche (11) einen konvex gerundeten, umlaufenden Taschenrand (14) mit einem mittleren Krümmungsradius (r) aufweist, wobei der mittlere Krümmungsradius (r) des Taschenrandes (14) in einem Bereich von einschließlich 0,05 mm bis einschließlich 0,25 mm liegt und insbesondere etwa 0,15 mm beträgt.

7. Schneidgarnitur nach einem der Ansprüche 1 bis 6,
**dadurch gekennzeichnet, dass** die Schmiermitteltasche (11) ein Volumen aufweist, welches in einem Bereich von einschließlich 0,012 mm³ bis einschließlich 0,028 mm³ liegt und insbesondere etwa 0,020 mm³ beträgt.

8. Schneidgarnitur nach einem der Ansprüche 1 bis 7,
**dadurch gekennzeichnet, dass** die Schmiermitteltaschen (11) je eine Taschenfläche aufweisen, dass die Gleitfläche (12) eine Grundfläche aufweist, und dass die Summe der Taschenflächen einer einzelnen Seitenfläche (8) in einem Bereich von einschließlich 10% bis einschließlich 40%, bevorzugt in einem Bereich von einschließlich 15% bis einschließlich 30% der Grundfläche liegt, und insbesondere etwa 20% der Grundfläche beträgt.

9. Schneidgarnitur nach einem der Ansprüche 1 bis 8,
**dadurch gekennzeichnet, dass** die Seitenfläche (8) durch einen Rand (15) begrenzt ist, wobei die Schmiermitteltaschen (11) in einem Abstand (a) zum Rand (15) liegen, und wobei der Abstand (a) mindestens 0,5 mm beträgt.

10. Schneidgarnitur nach einem der Ansprüche 1 bis 9,
**dadurch gekennzeichnet, dass** im Treibansatz (7) eine durchgehende Schmiermittelvorratsöffnung (16) angeordnet ist.

11. Schneidgarnitur nach einem der Ansprüche 1 bis 10,
**dadurch gekennzeichnet, dass** in der Seitenfläche (8) ein Schmiermittelkanal (17) angeordnet ist.

12. Schneidgarnitur nach Anspruch 10 oder 11,
**dadurch gekennzeichnet, dass** die Schmiermitteltaschen (11) in einem Abstand (b) zum äußeren Rand der Schmiermittelvorratsöffnung (16) und/oder des Schmiermittelkanals (17) liegen, und wobei der Abstand (b) mindestens 0,3 mm beträgt.

13. Schneidgarnitur nach einem der Ansprüche 1 bis 12,
**dadurch gekennzeichnet, dass** die Schmiermitteltasche (11) einen kreisscheibenförmigen Grundriss aufweist.

14. Schneidgarnitur nach Anspruch 13,
**dadurch gekennzeichnet, dass** die Schmiermitteltasche (11) einen Taschenboden (13) in Form eines Kugelabschnittes aufweist.

15. Schneidgarnitur nach einem der Ansprüche 1 bis 14,
**dadurch gekennzeichnet, dass** mindestens vier, bevorzugt mindestens sieben und insbesondere mindestens zehn Schmiermitteltaschen (11) in der Seitenfläche (8) vorgesehen sind.

16. Sägekette (3) für eine Schneidgarnitur (1) mit den Merkmalen nach einem der Ansprüche 1 bis 15.

## Claims

1. Cutting fitting (1) of a hand-guided chainsaw (2) driven by a drive motor (18), comprising a saw chain (3) with pin-connected chain links and a guide rail (4) for guiding the saw chain (3) along a partially continuous edge (5), wherein the saw chain (3) has driving members (6) with driving lugs (7) which are guided by their side surfaces (8) to slide between side walls (9) of a guide groove (10) of the guide rail (4) while forming a friction couple, wherein lubricant pockets (11) open only towards the side wall (9) of the guide groove (10) and otherwise closed are formed in the side surface (8), and wherein the side surface (8) has a flat sliding surface (12) sliding on the side wall (9) and remote from the lubricant pockets (11), **characterised in that** the lubricant pockets (11) have an average diameter (d) and a maximum depth (t), wherein the ratio between the average diameter (d) and the maximum depth (t) lies in a range from 7.0 to 15.0 inclusive, and wherein the average diameter (d) lies in a range from 0.6 mm to 1.0 mm inclusive.

2. Cutting fitting according to claim 1,
**characterised in that** the ratio between the average diameter (d) and the maximum depth (t) is approximately 10.0.

3. Cutting fitting according to claim 1 or 2,
**characterised in that** the average diameter (d) of the lubricant pocket (11) lies in a range from 0.7 mm to 0.9 mm inclusive and is in particular approximately 0.8 mm.

4. Cutting fitting according to any of claims 1 to 3,
**characterised in that** the maximum depth (t) of the lubricant pocket (11) lies in a range from 0.04 mm to 0.12 mm inclusive, preferably in a range from 0.06 mm to 0.10 mm inclusive, and is in particular approximately 0.08 mm.

5. Cutting fitting according to any of claims 1 to 4,
**characterised in that** the lubricant pocket (11) has a concavely curved pocket base (13) with an average radius of curvature (R), wherein the average radius of curvature (R) of the pocket base (13) lies in a range from 1.5 mm to 5.5 mm inclusive, preferably in a range from 2.5 mm to 4.5 mm inclusive, and is in particular approximately 3.5 mm.

6. Cutting fitting according to any of claims 1 to 5,
**characterised in that** the lubricant pocket (11) has a convexly rounded continuous pocket edge (14) with an average radius of curvature (r), wherein the average radius of curvature (r) of the pocket edge (14) lies in a range from 0.05 mm to 0.25 mm inclusive and is in particular approximately 0.15 mm.

7. Cutting fitting according to any of claims 1 to 6,
**characterised in that** the lubricant pocket (11) has a volume which lies in a range from 0.012 mm³ to 0.028 mm³ and is in particular approximately 0.020 mm³.

8. Cutting fitting according to any of claims 1 to 7,
**characterised in that** each of the lubricant pockets (11) has a pocket surface, **in that** the sliding surface (12) has a base surface, and **in that** the sum of the pocket surfaces of an individual side surface (8) lies in a range from 10% to 40% inclusive, preferably from 15% to 39% inclusive, of the base surface, and is in particular approximately 20% of the base surface.

9. Cutting fitting according to any of claims 1 to 8,
**characterised in that** the side surface (8) is bounded by an edge (15), wherein the lubricant pockets (11) have a distance (a) from the edge (15) and wherein the distance (a) is at least 0.5 mm.

10. Cutting fitting according to any of claims 1 to 9,
**characterised in that** a lubricant store through-opening (16) is provided in the driving lug (7).

11. Cutting fitting according to any of claims 1 to 10,
**characterised in that** a lubricant passage (17) is provided in the side surface (8).

12. Cutting fitting according to claim 10 or 11,
**characterised in that** the lubricant pockets (11) have a distance (b) from the outer edge of the lubricant store through-opening (16) and/or the lubricant passage (17), the distance (b) being at least 0.3 mm.

13. Cutting fitting according to any of claims 1 to 12,
**characterised in that** the lubricant pocket (11) has a circular disc-shaped horizontal projection.

14. Cutting fitting according to claim 13,
**characterised in that** the lubricant pocket (11) has a pocket base (13) in the shape of a spherical segment.

15. Cutting fitting according to any of claims 1 to 14,
**characterised in that** at least four, preferably at least seven and in particular at least ten, lubricant pockets (11) are provided in the side surface (8).

16. Saw chain (3) for a cutting fitting (1) with the features of any of claims 1 to 15.

## Revendications

1. Garniture de coupe (1) d'une scie à chaîne (2) à main entraînée par un moteur d'entraînement (18), comprenant une chaîne de scie (3) avec des maillons reliés entre eux de manière articulée, et un guide (4) pour guider la chaîne de scie (3) le long d'un bord (5) qui fait quasiment tout le tour, étant précisé que la chaîne de scie (3) comporte des maillons d'entraînement (6) avec des talons d'entraînement (7) qui sont guidés de manière coulissante, avec leurs surfaces latérales (8), entre les parois latérales (9) d'une rainure de guidage (10) du guide (4) en formant un couple frottant, qu'il est prévu dans la surface latérale (8) des creux pour lubrifiant (11) qui ne sont ouverts que vers la paroi latérale (9) de la rainure de guidage (10) et qui sont pour le reste fermés, et que la surface latérale (8) présente, à l'écart des creux pour lubrifiants (11), une surface de glissement (12) plane qui glisse sur la paroi latérale (9) de la rainure de guidage (10),
**caractérisée en ce que** le creux pour lubrifiant (11) présente un diamètre moyen (d) et une profondeur maximale (t), étant précisé que le rapport du diamètre moyen (d) sur la profondeur maximale (t) est situé dans une plage de 7,0 inclus à 15,0 inclus, et que le diamètre moyen (d) du creux pour lubrifiant (11) est situé dans une plage de 0,6 mm inclus à 1,0 mm inclus.

2. Garniture de coupe selon la revendication 1,
**caractérisée en ce que** le rapport du diamètre moyen (d) sur la profondeur maximale (t) est d'environ 10,0.

3. Garniture de coupe selon la revendication 1 ou 2,
**caractérisée en ce que** le diamètre moyen (d) du creux pour lubrifiant (11) est situé dans une plage de 0,7 mm inclus à 0,9 mm inclus et est en particulier d'environ 0,8 mm.

4. Garniture de coupe selon l'une des revendications 1 à 3,
**caractérisée en ce que** la profondeur maximale (t) du creux pour lubrifiant (11) est située dans une plage de 0,04 mm inclus à 0,12 mm inclus, de préférence dans une plage de 0,06 mm inclus à 0,10 mm inclus, et est en particulier d'environ 0,08 mm.

5. Garniture de coupe selon l'une des revendications 1 à 4,
**caractérisée en ce que** le creux pour lubrifiant (11) présente un fond (13) à courbe concave avec un rayon de courbure moyen (R), étant précisé que le rayon de courbure moyen (R) du fond (13) est situé dans une plage de 1,5 mm inclus à 5,5 mm inclus, de préférence dans une plage de 2,5 mm inclus à 4,5 mm inclus, et est en particulier d'environ 3,5 mm.

6. Garniture de coupe selon l'une des revendications 1 à 5,
**caractérisée en ce que** le creux pour lubrifiant (11) présente un bord (14) périphérique arrondi convexe avec un rayon de courbure moyen (r), étant précisé que le rayon de courbure moyen (r) du bord de creux (14) est situé dans une plage de 0,05 mm inclus à 0,25 mm inclus et est en particulier d'environ 0,15 mm.

7. Garniture de coupe selon l'une des revendications 1 à 6,
**caractérisée en ce que** le creux pour lubrifiant (11) présente un volume qui est situé dans une plage de 0,012 mm³ inclus à 0,028 mm³ inclus et est en particulier d'environ 0,020 mm³.

8. Garniture de coupe selon l'une des revendications 1 à 7,
**caractérisée en ce que** les creux pour lubrifiant (11) présentent chacun une surface de creux, **en ce que** la surface de glissement (12) présente une surface de base et **en ce que** la somme des surfaces de creux d'une surface latérale (8) individuelle est située dans une plage de 10 % inclus à 40 % inclus, de préférence dans une plage de 15% inclus à 30 % inclus, et représente en particulier environ 20 % de la surface de base.

9. Garniture de coupe selon l'une des revendications 1 à 8,
**caractérisée en ce que** la surface latérale (8) est délimitée par un bord (15), étant précisé que les creux pour lubrifiant (11) se trouvent à une distance (a) du bord (15) et que la distance (a) est d'au moins 0,5 mm.

10. Garniture de coupe selon l'une des revendications 1 à 9,
**caractérisée en ce qu'**il est prévu dans le talon d'entraînement (7) une ouverture de réserve de lubrifiant (16) traversante.

11. Garniture de coupe selon l'une des revendications 1 à 10,
**caractérisée en ce qu'**il est prévu dans la surface latérale (8) un conduit pour lubrifiant (17).

12. Garniture de coupe selon la revendication 10 ou 11,
**caractérisée en ce que** les creux pour lubrifiants (11) se trouvent à une distance (b) du bord extérieur de l'ouverture de réserve de lubrifiant (16) et/ou du conduit pour lubrifiant (17), étant précisé que la distance (b) est d'au moins 0,3 mm.

13. Garniture de coupe selon l'une des revendications 1 à 12,
**caractérisée en ce que** le creux pour lubrifiant (11) présente une forme circulaire, vu en plan.

14. Garniture de coupe selon la revendication 13,
**caractérisée en ce que** le creux pour lubrifiant (11) présente un fond (13) en forme de segment sphérique.

15. Garniture de coupe selon l'une des revendications 1 à 14,
**caractérisée en ce qu'**il est prévu au moins quatre, de préférence au moins sept et plus spécialement au moins dix creux pour lubrifiants (11) dans la surface latérale (8).

16. Chaîne de scie (3) pour une garniture de coupe (1) avec les caractéristiques selon l'une des revendications 1 à 15
